(19) Europäisches Patentamt
European Patent Office
Office européen des brevets

(11) EP 4 498 148 A1

(12) # EUROPEAN PATENT APPLICATION
published in accordance with Art. 153(4) EPC

(43) Date of publication:
**29.01.2025 Bulletin 2025/05**

(21) Application number: **23774425.5**

(22) Date of filing: **02.03.2023**

(51) International Patent Classification (IPC):
***G02C 7/00*** *(2006.01)* ***G02C 7/02*** *(2006.01)*
***C09D 133/14*** *(2006.01)* ***C09D 133/26*** *(2006.01)*
***C09D 143/04*** *(2006.01)* ***C09D 7/63*** *(2018.01)*
***G02B 1/10*** *(2015.01)*

(52) Cooperative Patent Classification (CPC):
**C09D 7/63; C09D 133/14; C09D 133/26; C09D 143/04; G02B 1/10; G02C 7/00; G02C 7/02**

(86) International application number:
**PCT/JP2023/007716**

(87) International publication number:
**WO 2023/181826 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.03.2022 JP 2022047279**

(71) Applicant: **Hoya Lens Thailand Ltd.**
**Pathumthani 12130 (TH)**

(72) Inventors:
- **KONO Shigetoshi**
  **Tokyo 160-8347 (JP)**
- **SAKATA Shusaku**
  **Tokyo 160-8347 (JP)**

(74) Representative: **Hoffmann Eitle**
**Patent- und Rechtsanwälte PartmbB**
**Arabellastraße 30**
**81925 München (DE)**

(54) **SPECTACLE LENS AND METHOD FOR MANUFACTURING SAME**

(57) A spectacle lens comprising a substrate and an anti-fog layer, wherein the anti-fog layer has a thickness of 5 to 50 um, and the anti-fog layer contains a resin and an antibacterial agent.

EP 4 498 148 A1

## Description

### Technical Field

The present disclosure relates to a spectacle lens and a method for manufacturing the spectacle lens.

### Background Art

A technique for forming an anti-fog layer on the surface of a lens substrate for preventing fogging (anti-fog layer) of a spectacle lens is conventionally known.

For example, a technique for coating the surface of a lens substrate with a surfactant is known.

In addition, a technique for forming a water-absorbing resin layer and a water-repellent layer on a lens substrate is also known. For example, Patent Literature 1 discloses an anti-fogging optical article produced by forming a water-absorbing layer containing a urethane or acrylic resin having a predetermined polyoxyethylene chain as a main component on the surface of a glass or plastic substrate, and forming a water-repellent layer containing at least one of an amino-modified silicone and a mercapto-modified silicone as a main component on the surface of the water-absorbing layer.

Furthermore, a technique for forming a hard coat layer, an antireflection layer (AR layer), and an anti-fog layer containing a surfactant and an antibacterial agent in this order on a surface of a lens substrate is also known

### Citation List

### Patent Literature

Patent Literature 1: WO 2013/005710 A

### Summary of Invention

### Technical Problem

In a spectacle lens produced by forming an anti-fog layer consisting of a surfactant on a surface of a lens substrate, the surfactant is easily removed from the lens surface when the surfactant is wiped with water. Because of this, the durability of the anti-fog layer was not sufficient and anti-fogging performance was not sufficient.

Further, in the anti-fog layer disclosed in Patent Literature 1, a water-absorbing layer is covered with a water-repellent layer constituting the outermost surface, so that the water-absorbing layer does not sufficiently exhibit water absorption performance. In addition, the anti-fog layer disclosed in Patent Literature 1 does not exhibit antibacterial performance at all.

Furthermore, in a spectacle lens produced by forming a hard coat layer, an antireflection layer (AR layer), and an anti-fog layer containing a surfactant and an antibacterial agent on a surface of a lens substrate, the durability of anti-fogging property is poor, and antibacterial performance was observed but low and insufficient.

An object of an embodiment of the present disclosure is to provide a spectacle lens excellent in anti-fogging property and antibacterial property.

### Solution to Problem

The embodiment of the present disclosure relates to the following [1] to [13].

[1] A spectacle lens comprising a substrate and an anti-fog layer, wherein the anti-fog layer has a thickness of 5 to 50 um, and the anti-fog layer contains a resin and an antibacterial agent.

[2] The spectacle lens according to [1], wherein the anti-fog layer is a layer formed of a coating composition containing a resin and an antibacterial agent.

[3] The spectacle lens according to [1] or [2], wherein the resin constituting the anti-fog layer contains a (meth)acrylic resin.

[4] The spectacle lens according to any one of [1] to [3], wherein the anti-fog layer is a cured product of a coating composition containing the following components (A) to (D):

Component (A): a (meth)acrylic resin (A) having a constituent unit derived from a monomer (a-1) represented by the following general formula (1), a constituent unit derived from a monomer (a-2) represented by the following

general formula (2), a constituent unit derived from a hydroxyalkyl (meth)acrylate (a-3), and a constituent unit derived from a monomer (a-4) represented by the following general formula (3),
Component (B): a polyol compound (B),
Component (C): a polyfunctional isocyanate compound (C), and
Component (D): an antibacterial agent (D).

[Chem.1]

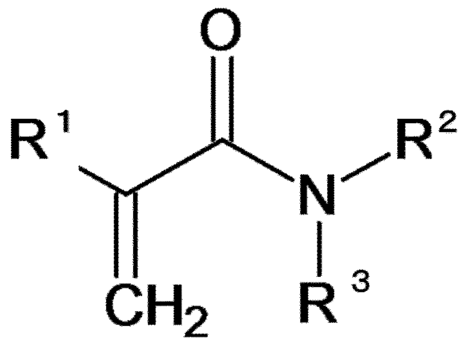

(1)

wherein $R^1$ is a hydrogen atom or a methyl group, $R^2$ and $R^3$ are each independently a hydrogen atom or an alkyl group having 1 to 3 carbon atoms, and $R^2$ and $R^3$ may be the same or different.

[Chem.2]

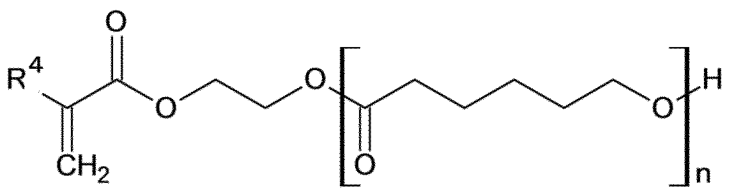

(2)

wherein $R^4$ is a hydrogen atom or a methyl group, and n is an integer of 1 to 5.

[Chem.3]

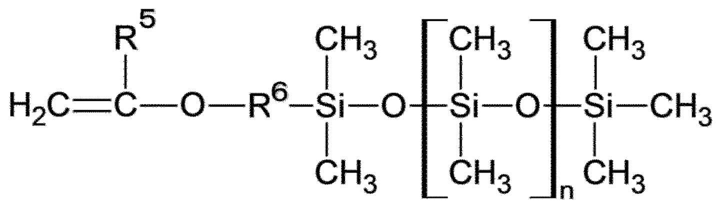

(3)

wherein $R^5$ is a hydrogen atom or a methyl group, $R^6$ is a divalent organic group, and n is 0 or an integer of 1 or more.

[5] The spectacle lens according to any one of [1] to [4], wherein the antibacterial agent is a cationic organic compound.
[6] The spectacle lens according to [5], wherein the antibacterial agent is a quaternary ammonium salt.
[7] The spectacle lens according to any one of [1] to [6], wherein a content of the antibacterial agent in the anti-fog layer is less than 22.73 mass%.
[8] The spectacle lens according to any one of [1] to [7], wherein the substrate and the anti-fog layer are directly laminated.
[9] The spectacle lens according to any one of [1] to [7], wherein the substrate, a primer layer provided on the substrate, and the anti-fog layer provided on the primer layer are laminated.
[10] The spectacle lens according to any one of [1] to [9], wherein the anti-fog layer is an outermost layer.

[11] A method for manufacturing the spectacle lens according to any one of [1] to [10], comprising a curing step of curing a coating composition containing a curable resin and an antibacterial agent on the substrate.
[12] The method for manufacturing the spectacle lens according to [11], wherein the coating composition contains the following components (A) to (D):

Component (A): a (meth)acrylic resin (A) having a constituent unit derived from a monomer (a-1) represented by the following general formula (1), a constituent unit derived from a monomer (a-2) represented by the following general formula (2), a constituent unit derived from a hydroxyalkyl (meth)acrylate (a-3), and a constituent unit derived from a monomer (a-4) represented by the following general formula (3),
Component (B): a polyol compound (B),
Component (C): a polyfunctional isocyanate compound (C), and
Component (D): an antibacterial agent (D).

[Chem.4]

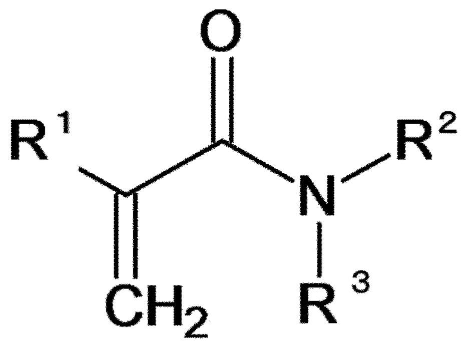

(1)

wherein $R^1$ is a hydrogen atom or a methyl group, $R^2$ and $R^3$ are each independently a hydrogen atom or an alkyl group having 1 to 3 carbon atoms, and $R^2$ and $R^3$ may be the same or different.

[Chem.5]

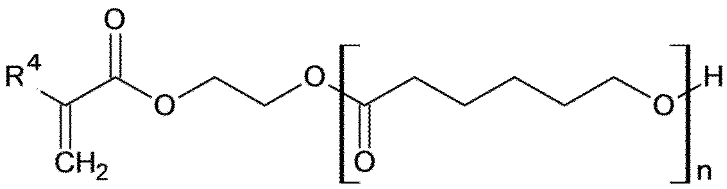

(2)

wherein $R^4$ is a hydrogen atom or a methyl group, and n is an integer of 1 to 5, and

[Chem.6]

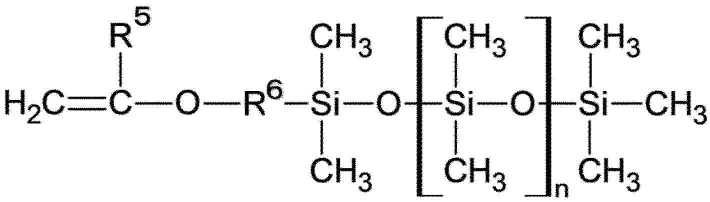

(3)

wherein $R^5$ is a hydrogen atom or a methyl group, $R^6$ is a divalent organic group, and n is 0 or an integer of 1 or more.

[13] The method for manufacturing the spectacle lens according to [11] or [12], wherein a content of the antibacterial agent is less than 5 mass% in 100 mass% of the total amount of the coating composition.

Advantageous Effects of Invention

According to an embodiment of the present disclosure, it is possible to provide a spectacle lens having anti-fogging property and excellent antibacterial property.

Description of Embodiments

Hereinafter, embodiments and examples of the present disclosure will be described. The same reference marks are used to denote the same or corresponding parts and the explanation may not be repeated. In the embodiments and Examples described below, when referring to the number, amount, and others, the scope of the present disclosure is not necessarily limited to the number, amount, and others unless otherwise specified. In the following embodiments, individual components are not necessarily essential to the embodiments and Examples of the present disclosure unless otherwise specified.

In the notation of the group (atomic group) in the present specification, if no indication is given of whether it is substituted or unsubstituted, both groups having no substituent and groups having a substituent are included. For example, the "alkyl group" includes an alkyl group having no substituent (unsubstituted alkyl group) and an alkyl group having a substituent (substituted alkyl group).

The notation "(meth)acryl" in the present specification represents a concept including both acryl and methacryl. The same applies to similar notations such as "(meth)acrylate".

In the present specification, the constituent unit derived from the monomer (a-1) may sometimes be referred to as a "constituent unit (a-1)", the constituent unit derived from the monomer (a-2) as a "constituent unit (a-2)", the constituent unit derived from the monomer (a-3) as a "constituent unit (a-3)", and the constituent unit derived from the monomer (a-4) as a "constituent unit (a-4)".

The "solid content" in the coating composition means the content of components except a solvent.

The "carbon atoms" for a group having a substituent means the number of carbon atoms present in a portion excluding the substituent.

[Spectacle lens]

A spectacle lens according to an embodiment of the present disclosure has a substrate and an anti-fog layer, in which the anti-fog layer has a thickness of 5 to 50 um and contains a resin and an antibacterial agent.

The spectacle lens according to an embodiment of the present disclosure is excellent in antibacterial property, since the anti-fog layer contains an antibacterial agent.

<Substrate>

As the substrate, resins made of various types of raw materials can be used.

Examples of the resin forming the substrate include a polycarbonate resin, a urethane urea resin, a (thio)urethane resin, a polysulfide resin, a polyamide resin, a polyester resin, and an acrylic allyl resin. The (thio)urethane resin means at least one selected from a thiourethane resin and a urethane resin. Of them, a (thio)urethane resin and a polysulfide resin are preferable.

In addition, the substrate to be used for the spectacle lens of the present embodiment is preferably a substrate made of a plastic having a refractive index of 1.50 or more, and more preferably 1.60 or more.

Preferable commercially available products of the plastic substrate include an allyl polycarbonate plastic lens "HILUX1.50" (manufactured by HOYA Corporation, refractive index 1.50), a thiourethane plastic lens "MERIA" (manufactured by HOYA Corporation, refractive index 1.60), a thiourethane plastic lens "EYAS" (manufactured by HOYA Corporation, refractive index 1.60), a thiourethane plastic lens "EYNOA" (manufactured by HOYA Corporation, refractive index 1.67), a polysulfide plastic lens "EYRY" (manufactured by HOYA Corporation, refractive index 1.70), and a polysulfide plastic lens "EYVIA" (manufactured by HOYA Corporation, refractive index 1.74).

The thickness and diameter of the substrate are not particularly limited. The thickness is usually 0.5 to 30 mm, for example, about 1 to 30 mm, and the diameter is usually about 50 to 100 mm.

The substrate may be either a finish lens or a semi-finish lens.

The surface shape of the substrate is not particularly limited, and may be, e.g., flat, convex, or concave.

The spectacle lens of the present disclosure may be any of, e.g., a single focal lens, a multifocal lens and a progressive power lens. In a progressive power lens, usually, a near viewing region (near vision) and a progressive region (intermediate region) are included in a lower region described above, and a distance viewing region (distance vision) is included in an upper region.

<Anti-fog layer>

In the spectacle lens of the present disclosure, the anti-fog layer contains a resin and an antibacterial agent. Since the anti-fog layer contains an antibacterial agent, as described above, the anti-fog layer is excellent in antibacterial property.

Here, it is preferable that the anti-fog layer is excellent also in antiviral property in addition to antibacterial property. Note that, since the size (diameter) of viruses is smaller than the size (diameter) of bacteria, generally, the antiviral property is less likely expressed than the antibacterial property.

The anti-fog layer preferably has water absorbability from the viewpoint of obtaining a spectacle lens excellent in anti-fogging property. Here, the water absorbability indicates a property of a material for taking up moisture. The presence or absence of the water absorbability of a spectacle lens having an anti-fog layer can be determined based on whether or not the time required for the spectacle lens to start clouding after exposure to a humid atmosphere is longer than that of a spectacle lens having no anti-fog layer.

The anti-fog layer is preferably provided as the outermost layer of the spectacle lens from the viewpoint of sufficiently exhibiting the anti-fogging property.

The anti-fog layer may be provided only on either one or both of the main surfaces of the substrate.

As one aspect according to the present embodiment, the anti-fog layer is preferably provided directly on the substrate from the viewpoint of a durability of anti-fogging property. That is, the spectacle lens according to the present embodiment preferably has the anti-fog layer directly on the substrate, from the viewpoint of durability of anti-fogging property. In the spectacle lens according to the present embodiment, the anti-fog layer may not be directly provided on the substrate. For example, the anti-fog layer may be provided on a functional layer such as a primer layer provided on the substrate.

The thickness (film thickness) of the anti-fog layer is 5 to 50 um, preferably 6 to 15 μm, and more preferably 7 to 11 um from the viewpoint of easy of production.

The thickness (film thickness) of the anti-fog layer is 5 um or more, preferably 6 um or more, and more preferably 7 um or more from the viewpoint of improvement of the anti-fogging property, and is 50 um or less, more preferably 15 um or less, and still more preferably 11 um or less from the viewpoint of easy of production.

The anti-fog layer preferably has water repellent performance. Due to this, the anti-fogging performance is further improved.

The resin constituting the anti-fog layer preferably contains a (meth)acrylic resin. Due to this, the anti-fogging property is further improved.

The antibacterial agent is not particularly limited as long as it has antibacterial performance, but is preferably at least one of a cationic organic compound and a metal nanocolloid, and more preferably a cationic organic compound. The cationic organic compound is preferably a quaternary ammonium salt, and the metal constituting the metal nanocolloid is preferably silver, copper, or zinc. Details of the antibacterial agent will be described later.

The content of the antibacterial agent in the anti-fog layer is not particularly limited, but is preferably less than 22.73 mass%, more preferably 0.23 to 11.37 mass%, and still more preferably 2.27 to 11.37 mass%.

The content of the resin in the anti-fog layer is preferably 77.27 mass% or more, more preferably 88.63 to 99.77 mass%, and still more preferably 88.63 to 97.73 mass% from the viewpoint of achieving both anti-fogging property and antibacterial property. The content of the (meth)acrylic resin in the anti-fog layer is preferably 77.27 mass% or more, more preferably 88.63 to 99.77 mass%, and still more preferably 88.63 to 97.73 mass% from the same viewpoint.

The anti-fog layer may further contain metal oxide particles as long as the effects of the present disclosure are not impaired. The metal oxide particles have an effect of improving the scratch resistance of the anti-fog layer. Examples of the metal oxide particles include silica, alumina, zirconia, titania, zinc oxide, strontium titanate, iron oxide, tungsten oxide, iron titanate, bismuth oxide, zinc oxide, silver oxide, copper oxide, cobalt oxide, and nickel oxide. Silica is preferable.

The average primary particle size of the metal oxide particles is preferably 5 to 300 nm.

When the anti-fog layer further contains metal oxide particles, the content thereof is preferably 5 to 50 mass%, more preferably 10 to 40 mass%, and still more preferably 15 to 35 mass%.

<<Coating compositions

The anti-fog layer is preferably a layer formed of a coating composition containing a resin and an antibacterial agent. In the layer thus formed, the antibacterial agent is well dispersed in the anti-fog layer, and the anti-fog layer appropriately keeps the antibacterial agent, so that the antibacterial property is improved.

The anti-fog layer is preferably a cured film of a coating composition containing a (meth)acrylic resin having a constituent unit derived from a siloxane compound and a constituent unit derived from acrylamide, and an antibacterial agent.

Since the anti-fog layer contains an antibacterial agent well dispersed and appropriately kept in the anti-fog layer

and exhibiting good antibacterial performance, the anti-fog layer is excellent in antibacterial property.

When the anti-fog layer has a siloxane bond derived from a siloxane compound, the slipperiness of the anti-fog layer is improved, and as a result, the scratch resistance of the anti-fog layer is further improved. Since the anti-fog layer has an amide group derived from acrylamide, the hydrophilicity of the anti-fog layer is increased, consequently water absorption performance is improved, with the result that anti-fogging property is improved.

The anti-fog layer is preferably formed of a cured film of a coating composition containing the following components (A) to (D):

Component (A): a (meth)acrylic resin (A) having a constituent unit derived from a monomer (a-1) represented by the following general formula (1), a constituent unit derived from a monomer (a-2) represented by the following general formula (2), a constituent unit derived from a hydroxyalkyl (meth)acrylate (a-3), and a constituent unit derived from a monomer (a-4) represented by the following general formula (3),
Component (B): a polyol compound (B),
Component (C): a polyfunctional isocyanate compound (C), and
Component (D): an antibacterial agent (D).

[Chem.7]

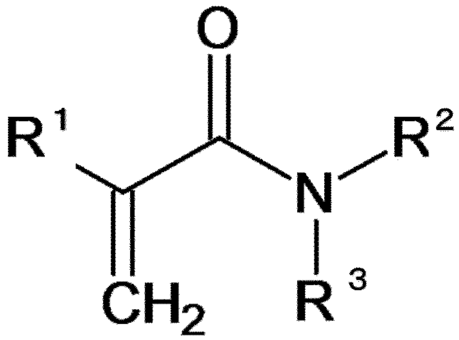

(1)

wherein $R^1$ is a hydrogen atom or a methyl group, and $R^2$ and $R^3$ are each independently a hydrogen atom or a linear or branched alkyl group having 1 to 3 carbon atoms,

[Chem.8]

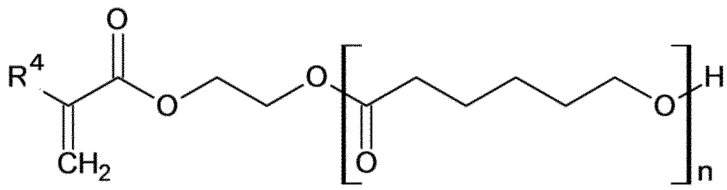

(2)

wherein $R^4$ is a hydrogen atom or a methyl group, and n is an integer of 1 to 5, and

[Chem.9]

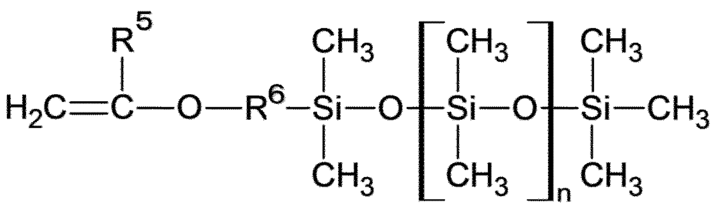

(3)

wherein $R^5$ is a hydrogen atom or a methyl group, $R^6$ is a divalent organic group, and n is 0 or an integer of 1 or more.

The constituent unit (a-1) contained in the component (A) (also referred to as a (meth)acrylic resin) has an amide group and high hydrophilic property, and easily maintains moisture. Due to this, it is considered that moisture deposited to the surface of the anti-fog layer obtained by curing the coating composition is easily absorbed into the cured film. It is also considered that since the polyol compound (B) is blended, gaps for sufficiently absorbing moisture can be present while maintaining the crosslinking density required as the anti-fog layer. For these reasons, it is considered that anti-fogging property is imparted.

The constituent unit (a-2) contained in the component (A) is a constituent unit having a polycaprolactone structure, and contributes to improvement in flexibility and elasticity of the anti-fog layer due to its flexible chemical skeleton. In addition, due to the content of the constituent unit (a-3) which is more rigid than the constituent unit (a-2), a balance between flexibility and elasticity is ensured. On the other hand, the polydimethylsiloxane chain of the constituent unit (a-4) contributes to improvement in slipperiness of the anti-fog layer. Due to this, when an external force is applied to the anti-fog layer, the aforementioned two effects of absorbing the external force by the flexibility and elasticity of the anti-fog layer and releasing the external force to the outside of the anti-fog layer by the slipperiness are synergistically exhibited. As a result, it is considered that the anti-fog layer is less likely to be scratched.

In the coating composition, preferably, the proportion of the constituent unit derived from the monomer (a-1) is 20 mass% or more and 65 mass% or less, the proportion of the constituent unit derived from the monomer (a-2) is 10 mass% or more and 40 mass% or less, and the proportion of the constituent unit derived from the monomer (a-4) is 1 mass% or more and 10 mass% or less, based on 100 mass% of all the constituent units constituting the component (A). In the coating composition, the ratio of the number (NCO) of isocyanate groups contained in the component (C) to the total amount (OH) obtained by adding the number of hydroxyl groups contained in the component (A) and the number of hydroxyl groups contained in the component (B), that is, (NCO)/(OH), is preferably 0.15 or more and 0.55 or less.

It is considered that when the composition of the coating composition is as described above, the equivalent ratio (NCO/OH) is set to fall within a specific range smaller than 1 while maintaining the balance (amount ratio) between the constituent units (a-2) and (a-3) having a hydroxyl group in the component (A), so that the hardness of the anti-fog layer can be increased to an extent that the friction resistance is improved. In addition, it is considered that the equivalent ratio (NCO/OH) is set to fall within a specific range smaller than 1 while maintaining the structural balance between the constituent units (a-2) and (a-3) having a hydroxyl group in the component (A), so that the crosslinking density of the anti-fog layer is increased, and the solvent resistance of the anti-fog layer is improved.

The components contained in the coating composition of the present embodiment will be described below.

(Component (A): (meth)acrylic resin)

The coating composition of the present embodiment preferably contains a (meth)acrylic resin as the component (A), that is, a (meth)acrylic resin having a constituent unit derived from a monomer (a-1) represented by the following general formula (1), a constituent unit derived from a monomer (a-2) represented by the following general formula (2), a constituent unit derived from a hydroxyalkyl (meth)acrylate (a-3), and a constituent unit derived from a monomer (a-4) represented by the following general formula (3) .

As described above, it is considered that the constituent unit (a-1) is mainly involved in the absorption of water (moisture).

The (meth)acrylic resin can be obtained typically by polymerizing the monomer (a-1), the monomer (a-2), the monomer (a-3), and the monomer (a-4). Details of the polymerization method will be described later.

Note that, in the present embodiment, 100% of the constituent units constituting the (meth)acrylic resin need not be constituent units derived from a (meth)acrylic monomer. That is, the (meth)acrylic resin may partially (but not all) contain a constituent unit derived from a monomer other than a (meth)acrylic monomer.

In order to sufficiently obtain the effect derived from the (meth)acrylic structure, 50 mass% or more of all the constituent units of the (meth)acrylic resin is preferably derived from a (meth)acrylic monomer. More preferably, 80 mass% or more of all the constituent units of the (meth)acrylic resin is derived from a (meth)acrylic monomer. Still more preferably, all (100%) constituent units of the (meth)acrylic resin are derived from a (meth)acrylic monomer.

The monomer (a-1) is not particularly limited as long as the monomer has the structure of the general formula (1) described above. Specific examples thereof include (meth)acrylamide, N-methylacrylamide, N,N-dimethyl (meth)acrylamide, N-ethyl (meth)acrylamide, N,N-diethyl (meth)acrylamide, N-n-propyl (meth)acrylamide, and N-isopropyl (meth) acrylamide.

At least one type of the monomer (a-1) may be used, and two or more types thereof may be used in combination. For example, a (meth)acrylic resin may be obtained by performing a polymerization reaction using two or more types of the monomers mentioned above.

The monomer (a-1) particularly preferably contains N,N-dimethyl (meth)acrylamide or N,N-diethyl (meth) acrylamide from the viewpoint of improving anti-fogging performance.

In the present embodiment, the content of the constituent unit derived from the monomer (a-1) in the (meth)acrylic

resin is preferably 20 to 65 mass% based on the total amount of all the constituent units of the component. The content is more preferably 22 to 60 mass%, and still more preferably 25 to 55 mass%. If the content of the constituent unit derived from the monomer (a-1) is 20 mass% or more, it is easy to form an anti-fog layer exhibiting anti-fogging performance suitable for practical use. If the content of the constituent unit derived from the monomer (a-1) is 65 mass% or less, it is avoided that the ratio of constituent units derived from other monomers is relatively reduced, with the result that it becomes easy to maintain the balance of the entire composition.

The monomer (a-2) is not particularly limited as long as the monomer has the structure of the general formula (2) .

In the present embodiment, the (meth)acrylic resin contains the constituent unit derived from the monomer (a-2) in an amount of preferably 10 to 40 mass%, more preferably 20 to 38 mass%, and still more preferably 25 to 35 mass% based on the total amount of all the constituent units of the resin.

If the content of the constituent unit derived from the monomer (a-2) is 10 mass% or more, the flexibility of the anti-fog layer is easily ensured, whereas, if the content is 40 mass% or less, the elasticity of the anti-fog layer is easily ensured.

The (meth)acrylic resin may contain a plurality of types of repeating units derived from the monomer (a-2).

The monomer (a-3) is a hydroxyalkyl (meth)acrylate. Specific examples of the hydroxyalkyl (meth)acrylate include hydroxyethyl (meth)acrylate, hydroxypropyl (meth)acrylate, and hydroxybutyl (meth)acrylate. In the present embodiment, of these, hydroxyethyl (meth)acrylate is preferable.

In the present embodiment, the content of the constituent unit derived from the monomer (a-3) in the (meth)acrylic resin is preferably 1 to 30 mass%, more preferably 2 to 20 mass%, and still more preferably 3 to 15 mass% based on the total amount of all the constituent units of the (meth)acrylic resin.

The monomer (a-3) has a hydroxyl group similarly to the monomer (a-2), and undergoes a crosslinking reaction with a polyfunctional isocyanate compound described later to form an anti-fog layer.

In the present embodiment, not the monomer (a-2) alone is subjected to a crosslinking reaction but the monomer (a-2) together with the monomer (a-3) are subjected to a crosslinking reaction with a polyfunctional isocyanate compound to form the anti-fog layer having various physical properties.

As described above, since the (meth)acrylic resin contains the constituent units derived from the monomer (a-2) and the monomer (a-3), the (meth)acrylic resin is a resin having hydroxyl groups as a whole, that is, having a hydroxyl value. Because of this, a polyol compound described later reacts with a (meth)acrylic resin described later to be able to form a crosslinked structure.

The hydroxyl value of the (meth)acrylic resin is preferably 40 to 150 mg KOH/g, more preferably 50 to 140 mg KOH/g, and still more preferably 55 to 130 mg KOH/g.

If this numerical range is satisfied, a polyol compound (described later) reacts with a polyfunctional isocyanate compound (described later) to easily and appropriately control the crosslinked structure. Therefore, the anti-fog layer can be hardened while maintaining the flexibility and elasticity of the anti-fog layer, and the content of the antibacterial agent in the anti-fog layer can be increased. Consequently, it is easy to simultaneously achieve the scratch resistance, reduction of friction resistance, and solvent resistance and antibacterial property of the anti-fog layer, more excellently.

Note that, the hydroxyl value is the number of milligrams of potassium hydroxide required to neutralize acetic acid combined with hydroxyl groups, when 1 g of a sample is acetylated.

The monomer (a-4) is not particularly limited as long as the monomer has the structure of the general formula (3) .

The (meth)acrylic resin may contain a plurality of types of repeating units derived from the monomer (a-4). For example, a (meth)acrylic resin may be obtained by performing a polymerization reaction using two or more types of the monomers listed above.

In the present embodiment, the content of the constituent unit derived from the monomer (a-4) in the (meth)acrylic resin is preferably 1 to 10 mass%, more preferably 2 to 8 mass%, and still more preferably 3 to 7 mass% based on all the constituent units of the component (A) .

If the content of the constituent unit derived from the monomer (a-4) is 1 mass% or more, an anti-fog layer having satisfactory scratch resistance is easily obtained. If the content is 10 mass% or less, a homogeneous (meth)acrylic resin is easily synthesized.

The (meth)acrylic resin may or may not contain an optional constituent unit (constituent unit (a-5)) other than the constituent unit (a-1), the constituent unit (a-2), the constituent unit (a-3), and the constituent unit (a-4). Examples of the constituent unit (a-5) include constituent units derived from monomers shown below. If such a constituent unit is contained in the (meth)acrylic resin, the glass transition temperature of the (meth)acrylic resin and the physical properties (e.g., hardness and softness) of the anti-fog layer can be controlled and optimized.

Examples of the constituent unit (a-5) include constituent units derived from a monomer represented by the general formula $CH_2$=CR-COO-R' wherein R is a hydrogen atom or a methyl group, and R' is an alkyl group, a monocyclic or polycyclic cycloalkyl group, an aryl group, or an aralkyl group.

Specific examples of the monomer include methyl (meth)acrylate, ethyl (meth)acrylate, n-butyl (meth)acrylate, isobutyl (meth)acrylate, tert-butyl (meth)acrylate, 2-ethylhexyl (meth)acrylate, isodecyl (meth)acrylate, n-lauryl (meth) acrylate, n-stearyl (meth)acrylate, phenyl (meth)acrylate, and benzyl (meth)acrylate.

Of them, a monomer wherein R' is an alkyl group having 1 to 8 carbon atoms is preferable, a monomer wherein R' is an alkyl group having 1 to 6 carbon atoms is more preferable, and a monomer wherein R' is an alkyl group having 1 to 4 carbon atoms is still more preferable.

The (meth)acrylic resin may include a plurality of types of repeating units corresponding to the constituent unit (a-5). For example, a (meth)acrylic resin may be obtained by performing a polymerization reaction using two or more types of the monomers listed as specific examples in the above.

If the (meth)acrylic resin contains the constituent unit (a-5), the content thereof is preferably 1 to 40 mass%, more preferably 10 to 35 mass%, and still more preferably 20 to 30 mass% based on the total amount of all the constituent units of the (meth)acrylic resin.

The weight average molecular weight (Mw) of the (meth)acrylic resin is not particularly limited, but is preferably 10,000 to 100,000, more preferably 20,000 to 70,000, and still more preferably 30,000 to 60,000. If the weight average molecular weight is 10,000 or more, it is easy to obtain desired antifogging performance, and if the weight average molecular weight is 100,000 or less, the coating composition tends to be excellent in coating performance when applied to an object (substrate) to be coated such as a spectacle lens.

The weight average molecular weight can be obtained by gel permeation chromatography (GPC) as a weight average molecular weight in terms of polystyrene based on, for example, a calibration curve prepared using standard polystyrene.

The glass transition temperature of the (meth)acrylic resin is not particularly limited, but is preferably 20 to 120°C, more preferably 25 to 110°C, and still more preferably 30 to 100°C.

The glass transition temperature of the (meth)acrylic resin can be obtained by various methods, and for example, can be obtained based on the following Fox's equation.

$$1/Tg = (W_1/Tg_1) + (W_2/Tg_2) + (W_3/Tg_3) + \cdots + (W_n/Tg_n)$$

wherein Tg represents the glass transition temperature (K) of the (meth) acrylic resin, $W_1$, $W_2$, $W_3$... $W_n$ each represent the mass fraction of each monomer, $Tg_1$, $Tg_2$, $Tg_3$... $Tg_n$ each represent the glass transition temperature (K) of a homopolymer composed of a monomer corresponding to the mass fraction of each monomer.

In the present specification, the glass transition temperature of the (meth)acrylic resin (not the glass transition temperature of the anti-fog layer, but the glass transition temperature of the (meth)acrylic resin alone) means a glass transition temperature obtained based on the above equation. Note that the glass transition temperature of a monomer, such as a special monomer or a polyfunctional monomer, whose glass transition temperature is unknown, is obtained using only a monomer whose glass transition temperature is known.

The (meth)acrylic resin can be obtained typically by a polymerization reaction. As the polymerization reaction, various methods such as radical polymerization, cationic polymerization, and anionic polymerization may be employed. Of them, radical polymerization is preferable. As the polymerization, any one of, e.g., solution polymerization, suspension polymerization, and emulsion polymerization may be employed. Of them, solution polymerization is preferable from the viewpoint of, e.g., precise control of polymerization.

As the polymerization initiator for radical polymerization, a known polymerization initiator can be used. Examples of the polymerization initiator include azo initiators such as 1,1'-azobis(cyclohexane-1-carbonitrile, azobisisobutyronitrile, 2,2-azobis(2-methylbutyronitrile), 2,2-azobis(2-methylpropionitrile), and 2,2-azobis(2,4-dimethylvaleronitrile); peroxide initiators such as benzoyl peroxide, t-butyl peroxyoctanoate, diisobutyl peroxide, di(2-ethylhexyl)peroxypivalate, decanoyl peroxide, t-butyl peroxy-2-ethylhexanoate, and t-butyl peroxybenzoate; and redox initiators having an oxidizing agent and a reducing agent in combination, such as a combination of hydrogen peroxide and an iron(II) salt, and a combination of a persulfate and sodium hydrogen sulfite. These may be used singly or in combination of two or more types thereof.

The amount of the polymerization initiator to be blended is not particularly limited, but is preferably 0.001 to 10 parts by mass based on 100 parts by mass of the total amount of the mixed solution of monomers to be polymerized.

In the polymerization reaction, e.g., a chain transfer agent, a polymerization inhibitor, and a molecular weight modifier commonly known may be appropriately used.
Further, the polymerization reaction may be performed in one stage or in two or more stages. The temperature of the polymerization reaction is not particularly limited, but is typically in a range of 50°C to 200°C, and preferably 80°C to 150°C.

(Component (B): polyol compound)

The coating composition of the present embodiment preferably contains a polyol compound. The polyol compound contained reacts with a polyfunctional isocyanate compound as described later together with a (meth)acrylic resin to form an anti-fog layer having an excellent durability of anti-fogging property. The number of hydroxyl groups of the polyol compound per molecule is 2 or more, preferably 2 to 6, and more preferably 2 to 4.

The polyol compound preferably includes at least one or more polyol compounds selected from the group consisting of a polycaprolactone polyol, a polycarbonate polyol, and a polyether polyol. The chemical structures of these polyol compounds have appropriately flexibility and elasticity. Owing to this, the flexibility and elasticity of the anti-fog layer can be more enhanced.

The polycaprolactone polyol can be used without particular limitation as long as it is a compound having a lactone ring opened and two or more hydroxyl groups per molecule.

The polycarbonate polyol can be used without particular limitation as long as it is a compound having a carbonate group represented by -O-(C=O)-O- and two or more hydroxyl groups per molecule. The polycarbonate polyol can be obtained by reacting one or more types of polyol raw materials (polyhydric alcohols) with a carbonate ester or phosgene.

Examples of the polyol raw material include, but are not particularly limited to, aliphatic polyols, polyols having an alicyclic structure, and aromatic polyols. In the present embodiment, an aliphatic polyol having no alicyclic structure is preferable from the viewpoint of the flexibility of the anti-fog layer.

Examples of the carbonate ester include aliphatic carbonate esters such as dimethyl carbonate and diethyl carbonate; aromatic carbonate esters such as diphenyl carbonate; and cyclic carbonate esters such as ethylene carbonate. Of them, an aliphatic carbonate ester is preferable, and dimethyl carbonate is particularly preferable from the viewpoint of availability and easy of production.

The polyether polyol can be used without particular limitation as long as it is a compound having an ether bond (-O-) and two or more hydroxyl groups per molecule.

Specific examples of the compound include polyether polyols obtained by addition polymerization of an alkylene oxide such as ethylene oxide, propylene oxide, or butylene oxide, using, as an initiator, a compound having two or more, preferably two or three active hydrogen groups such as a low molecular weight polyol such as ethylene glycol, 1,2-propanediol, 1,3-propanediol, 1,2-butanediol, 1,3-butanediol, 1,4-butanediol, 1,5-pentanediol, 1,6-hexanediol, 1,8-octanediol, 1,9-nonanediol, 3-methyl-1,5-pentanediol, 3,3-dimethylolheptane, diethylene glycol, dipropylene glycol, neopentyl glycol, cyclohexane-1,4-diol, cyclohexane-1,4-dimethanol, dimer acid diol, bisphenol A, bis(β-hydroxyethyl) benzene, xylylene glycol, glycerin, trimethylolpropane, and pentaerythritol; or a low molecular weight polyamine such as ethylenediamine, propylenediamine, toluenediamine, meta-phenylenediamine, diphenylmethanediamine, and xylylenediamine; and polyether polyols obtained by ring-opening polymerization of a cyclic ether monomer including an alkyl glycidyl ether such as methyl glycidyl ether, an aryl glycidyl ether such as phenyl glycidyl ether, and tetrahydrofuran.

In the present embodiment, the polyol compound may be a compound corresponding to a plurality of polycaprolactone polyols, polycarbonate polyols, and polyether polyols. The polyol compound may be, for example, a polyether polyester polyol having an ether bond and an ester bond.

The polyol compound may also contain a plurality of types of polycaprolactone polyols, polycarbonate polyols, and polyether polyols.

The hydroxyl value of the polyol compound is preferably 50 to 500 mg KOH/g, more preferably 100 to 350 mg KOH/g, and still more preferably 150 to 250 mg KOH/g. If the amount of the hydroxyl group is appropriately set, formation of a crosslinked structure by the reaction with the following polyfunctional isocyanate compound is limited, the properties of the anti-fog layer, such as flexibility and elasticity can be further easily enhanced, and the content of the antibacterial agent in the anti-fog layer can be increased.

In the present embodiment, the weight average molecular weight (Mw) of the polyol compound is preferably 450 to 2,500, more preferably 500 to 1,500, and still more preferably 500 to 700. If an appropriate molecular weight is employed, change in appearance of anti-fog layer due to improvement in flexibility and elasticity can be suppressed, at the same time, at the same time, durability of the anti-fog layer can be enhanced to a higher level.

The content of the polyol compound in the coating composition is preferably 5 to 200 parts by mass, more preferably 15 to 180 parts by mass, still more preferably 20 to 150 parts by mass, still even more preferably 20 to 100 parts by mass, still even more preferably 20 to 50 parts by mass, and still even more preferably 20 to 40 parts by mass based on 100 parts by mass of the (meth)acrylic resin. If this numerical range is satisfied, the performance derived from the polyol compound is easily obtained, and the balance with other components is easily achieved.

In the present embodiment, the polyol compound preferably contains a polycaprolactone polyol among the polycaprolactone polyol, the polycarbonate polyol, and the polyether polyol described above. Of polycaprolactone polyols, a polycaprolactone diol (a compound having a caprolactone structure and two hydroxyl groups) is particularly preferable.

This is because the (meth)acrylic resin as the component (A) has the structure of the general formula (2) described above, that is, a caprolactone structure, and thus tends to have good compatibility, as the polyol compound, with the resin, and tends to improve anti-fogging performance and antibacterial performance without excessively increasing the crosslinking density.

(Component (C): polyfunctional isocyanate compound)

The coating composition of the present embodiment preferably contains a polyfunctional isocyanate compound

as the component (C). Since the coating composition contains the polyfunctional isocyanate compound, the hydroxyl groups of the constituent unit (a-2) and the constituent unit (a-3) contained in the (meth)acrylic resin as the component (A), the hydroxyl group of the polyol compound as the component (B), and the polyfunctional isocyanate compound cause a crosslinking reaction to form an anti-fog layer having an excellent durability of anti-fogging property.

The polyfunctional isocyanate compound is a compound having two or more isocyanate groups (including isocyanate groups protected by a leaving group) per molecule. Preferably, the number of functional groups of the polyfunctional isocyanate compound is more preferably 2 to 6 per molecule, and still more preferably 2 to 4 per molecule.

Examples of the polyfunctional isocyanate compound include aliphatic diisocyanates such as lysine isocyanate, hexamethylene diisocyanate, and trimethylhexane diisocyanate; cyclic aliphatic diisocyanates such as hydrogenated xylylene diisocyanate, isophorone diisocyanate, methylcyclohexane-2,4-(or 2,6)-diisocyanate, 4,4'-methylenebis(cyclohexyl isocyanate), and 1,3-(isocyanatomethyl)cyclohexane; and tri- or higher functional isocyanates such as lysine triisocyanate.

As the polyfunctional isocyanate compound as the component (C), not only those described above but also a multimer thereof such as a biuret type, an isocyanurate type, or an adduct type may be used. Of them, a biuret type polyfunctional isocyanate compound having appropriate rigidity is preferable.

In the present embodiment, the content of the polyfunctional isocyanate compound in the coating composition is not particularly limited as long as it is blended according to the equivalent ratio (NCO)/(OH) described later. The content is usually 5 to 100 parts by mass, preferably 7 to 75 parts by mass, more preferably 10 to 60 parts by mass, still more preferably 10 to 50 parts by mass, still even more preferably 15 to 40 parts by mass, and still even more preferably 20 to 30 parts by mass based on 100 parts by mass of the (meth)acrylic resin. If this numerical range is satisfied, it is considered that necessary and sufficient crosslinking is performed in anti-fog layer.

The molar amount (that is, equivalent ratio (NCO)/(OH)) of the isocyanate groups (including a blocked isocyanate group) contained in the polyfunctional isocyanate compound to the hydroxyl groups contained in the (meth)acrylic resin and the polyol compound preferably falls within a range of 0.15 to 0.55. If the equivalent ratio (NCO)/(OH) falls within this range, the crosslinking density becomes sufficiently high, with the result that functions such as anti-fogging property and solvent resistance of an anti-fog layer become sufficient.

From this viewpoint, the equivalent ratio (NCO)/(OH) is preferably 0.25 to 0.50 and more preferably 0.35 to 0.45.

(Component (D): antibacterial agent)

The coating composition of the present embodiment preferably contains an antibacterial agent as the component (D). The type of antibacterial agent is not particularly limited as long as it has antibacterial performance. Examples thereof include organic antibacterial agents such as aldehyde, carboxylic acid, phenol, organic iodine, benzimidazole, isothiazoline, nitrile, pyridine, triazine, N-haloalkylthio based, quaternary ammonium salt, pyrithione, organocopper, and organic arsenic antibacterial agents; and inorganic antibacterial agents such as a phosphate carrying a metal ion such as silver, copper or zinc, a silicate (e.g., zeolite, silica gel) or chelate complex salt, colloid of a single metal, titanium oxide, and oxides of a metal such as calcium or magnesium. These antibacterial agents may be dissolved or dispersed in an organic solvent.

In consideration of the balance among the safety, antibacterial performance and sustainability of the antibacterial agent itself, the thermal stability of the antibacterial agent when processed into a spectacle lens, and transparency and other general physical properties of the spectacle lens, the antibacterial agent is preferably at least one of a cationic organic compound among organic antibacterial agents and a metal nanocolloid among inorganic antibacterial agents, and more preferably a cationic organic compound.

The term "transparency" herein is synonymous with transparency in "appearance evaluation" in Examples described later, and falls within an acceptable range if the evaluation criterion 3 or 2 is satisfied.

The "cationic organic compound" herein is an organic compound that can be ionized to become a cation (cation) and can function as an antibacterial agent. Thus, the anti-fog layer containing the cationic organic compound as the antibacterial agent can contribute to antibacterial property exhibited by the spectacle lens of the present disclosure. In the anti-fog layer, a part or all of the cationic organic compound may be contained in the form of a salt or an ionized cation. Furthermore, as a result of studies by the present inventors, it has been confirmed that a spectacle lens having an anti-fog layer containing a cationic organic compound is excellent in not only antibacterial property but also light resistance.

Of the organic antibacterial agents mentioned above, the cationic organic compound is preferably an ammonium salt and the metal constituting the metal nanocolloid is preferably silver, copper, or zinc. These may be used singly or in combination of two or more types thereof.

The ammonium salt is a salt of an ammonium ion. The ammonium ion is a monovalent cation represented by "$NR_4^+$", and four Rs each independently represent a hydrogen atom or a substituent. A salt of an ammonium ion in which three of the four Rs are hydrogen atoms and the other one is a substituent, is a primary ammonium salt, and a salt of an ammonium ion in which two of the four Rs are hydrogen atoms and the other two are substituents is a secondary ammonium salt, a salt of an ammonium ion in which three of the four Rs are substituents and the other one is a hydrogen

atom is a tertiary ammonium salt, and a salt of an ammonium ion in which all the four Rs are substituents is a quaternary ammonium salt. In ammonium ions comprising a plurality of Rs, the plurality of Rs are the same or different substituents. From the viewpoint of exhibiting more excellent antibacterial property, the cationic organic compound is preferably a quaternary ammonium salt.

Examples of the quaternary ammonium salt include alkoxysilane quaternary ammonium salts such as a didecyldimethylammonium salt, a stearyldimethylbenzylammonium salt, a cetylpyridinium salt, an octadecyltrimethylammonium salt, a hexadecyltrimethylammonium salt, an octadecyltriethylammonium salt, a dodecyldimethylhydroxyethylammonium salt, a tetradecyldimethylhydroxyethylammonium salt, dodecyldimethylhydroxyethylammonium salt, tetradecyldimethylhydroxyethylammonium salt, methoxysilane quaternary ammonium salt, and ethoxysilane quaternary ammonium salt. Examples of the anion constituting the salt include a halogen ion, an alkyl sulfate ion, and an alkyl phosphate ion.

Of them, alkoxysilane quaternary ammonium salts such as methoxysilane quaternary ammonium salts and ethoxysilane quaternary ammonium salts are preferable, and methoxysilane-quaternary ammonium salts are more preferable.

The alkoxysilane quaternary ammonium salt is a quaternary ammonium salt having an alkoxysilyl group. The alkoxysilyl group is a monovalent group represented by "$(R^{11}O)_3Si$-", and three $R^{11}$s each independently represent an alkyl group. The alkoxysilyl group can be, for example, a methoxysilyl group "$(CH_3O)_3Si$-", an ethoxysilyl group "$(CH_3CH_2O)_3Si$-".

The methoxysilane quaternary ammonium salt has an ammonium group having a relatively long chain alkyl group exhibiting antibacterial or antiviral property in the molecule. It is considered that the methoxysilane quaternary ammonium salt is satisfactorily dispersed in the anti-fog layer and appropriately and continuously kept in the anti-fog layer, thereby exhibiting antibacterial performance over a long period of time.

Specific examples of the methoxysilane quaternary ammonium salt include a compound represented by the following general formula (4).

$$[(CH_3O)_3Si\text{-}(CH_2)_3](R^7)(R^8)(R^9)N^+X^- \qquad (4)$$

In the general formula (4), $R^7$ represents an alkyl group having 12 to 24 carbon atoms, $R^8$ and $R^9$ each independently represent an alkyl group having 1 to 6 carbon atoms, and X represents a halogen ion or an organic carbonyloxy ion (organic carboxylic acid ion).

Examples of the halogen ion represented by X in the general formula (4) include a chlorine ion and a bromine ion, and examples of the organic carbonyloxy ion (organic carboxylic acid ion) include a methylcarbonyloxy ion (acetate ion), an ethylcarbonyloxy ion (propionate ion), and a phenylcarbonyloxy ion (benzoate ion).

Examples of the alkyl group having 12 to 24 carbon atoms represented by $R^7$ in general Formula (4) include a dodecyl group, a tridecyl group, a tetradecyl group, a pentadecyl group, a hexadecyl group, a heptadecyl group, an octadecyl group, a nonadecyl group, an eicosyl group, an uneicosyl group, a doeicosyl group, a trieicosyl group, and a tetraeicosyl group.

Examples of the alkyl group having 1 to 6 carbon atoms represented by each of $R^8$ and $R^9$ in the general formula (4) include a methyl group, an ethyl group, a propyl group, an isopropyl group, a butyl group, a pentyl group, a hexyl group, and a cyclohexyl group.

Specific examples of the methoxysilane quaternary ammonium salt represented by the above general formula (4) include octadecyldimethyl(3-trimethoxysilylpropyl)ammonium chloride, dodecyldimethyl(3-trimethoxysilylpropyl)ammonium chloride, dodecyldiisopropyl(3-trimethoxysilylpropyl)ammonium chloride, tetradecyldimethyl(3-trimethoxysilylpropyl)ammonium chloride, tetradecyldiethyl(3-trimethoxysilylpropyl)ammonium chloride, tetradecyl-di-n-propyl(3-trimethoxysilylpropyl)ammonium chloride, pentadecyldimethyl(3-trimethoxysilylpropyl)ammonium chloride, pentadecyldiethyl(3-trimethoxysilylpropyl)ammonium chloride, pentadecyl-di-n-propyl(3-trimethoxysilylpropyl)ammonium chloride, hexadecyldimethyl(3-trimethoxysilylpropyl)ammonium chloride, hexadecyldiethyl(3-trimethoxysilylpropyl)ammonium chloride, hexadecyl-di-n-propyl(3-trimethoxysilylpropyl)ammonium chloride, octadecyldiethyl(3-trimethoxysilylpropyl) ammonium chloride, and octadecyl-di-n-propyl(3-trimethoxysilylpropyl)ammonium chloride. Of them, octadecyldimethyl(3-trimethoxysilylpropyl)ammonium chloride (formula (5)) is preferable from the viewpoint of satisfactorily exhibiting antibacterial and antiviral properties.

[Chem.10]

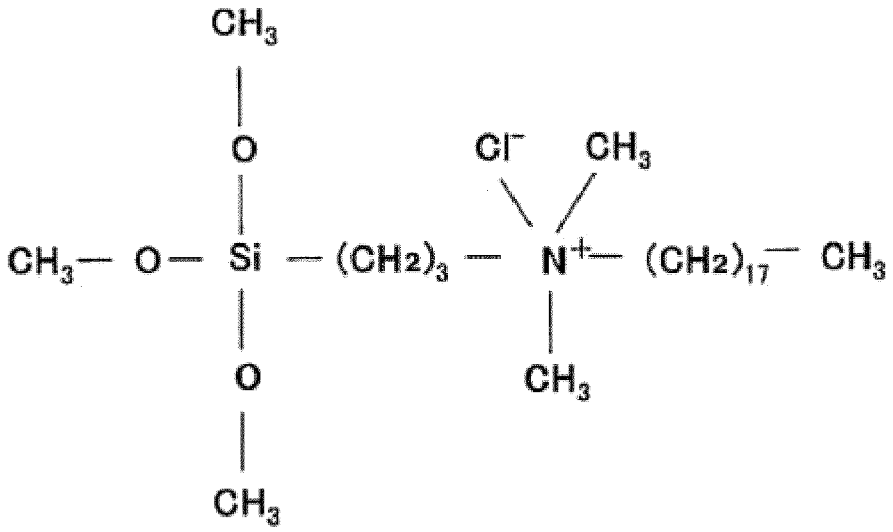

Formula

(5)

As the cationic organic compound, a commercially available product can also be used. Examples thereof include "NICCANON (registered trademark) RB", "NICCANON (registered trademark) RB-40" (all are products manufactured by Nicca Chemical Co., Ltd.), "Sanisol" (registered trademark) B-50: alkyl (C12 to C16) benzyldimethylammonium chloride", and "Sanisol (registered trademark) C: alkyl (C12 to C16) benzyldimethylammonium chloride"(all are products manufactured by Kao Chemical Co., Ltd.). As the cationic organic compound, a compound synthesized by a known method can also be used.

When both the quaternary ammonium salt and the metal nanocolloid are contained as the antibacterial agent, the mass ratio of the quaternary ammonium salt to the metal nanocolloid (quaternary ammonium salt: metal nanocolloid) is preferably 100:1 to 1:100, more preferably 100:5 to 5:100, and still more preferably 100:10 to 10:100.

The content of the antibacterial agent in 100 mass% of the total amount of the coating composition is not particularly limited, but is preferably less than 5 mass%, more preferably 0.23-4.80 mass%, still more preferably 0.45 to 4.80 mass%, still more preferably 0.90 to 4.80 mass%, still more preferably 2.27 to 4.80 mass%, still more preferably 3.00 to 4.80 mass%, and still more preferably 4.00 to 4.80 mass%.

(Form of coating composition)

The coating composition of the present embodiment may be a one-pack composition, that is, all components except a solvent may be substantially uniformly mixed (dissolved or dispersed) in the solvent. When the polyfunctional isocyanate compound is a blocked isocyanate, the one-pack composition is preferable.

As another aspect, the coating composition of the present embodiment may be a two-pack composition. The two-pack coating composition can be enhanced in storage stability.

For example, the coating composition of the present embodiment may be composed of (1) liquid A containing a (meth)acrylic resin and/or a polyol compound but not containing a polyfunctional isocyanate compound, and (2) liquid B containing a polyfunctional isocyanate compound but not containing a (meth)acrylic resin and a polyol compound. Liquid A and liquid B are stored in separate containers and may be mixed immediately before use (application). The antibacterial agent may be added to either one of liquid A or liquid B, may be present in the state of a dispersion liquid as liquid C, or may be mixed with liquid A and liquid B immediately before use (application).

In this case, components (e.g., additives) except a (meth)acrylic resin, a polyol compound, a polyfunctional isocyanate compound and an antibacterial agent may be contained in liquid A, or liquid B, or prepared in another container.

In particular, when the polyfunctional isocyanate compound is not a blocked isocyanate (that is, when the isocyanate group is present in the form of -NCO in the liquid system), the coating composition is preferably a two-pack composition.

(Solvent)

The coating composition of the present embodiment may also contain a solvent. If a solvent is used, the viscosity and the solid content of the coating composition can be easily controlled.
Examples of the solvent include aromatic hydrocarbon solvents such as toluene and xylene; alcohol solvents such as methanol, ethanol, isopropyl alcohol, n-butanol, t-butanol, isobutanol, and diacetone alcohol; ketone solvents such as acetone, methyl ethyl ketone, methyl isobutyl ketone, and cyclohexanone; ester solvents such as ethyl acetate, propyl acetate, butyl acetate, and isobutyl acetate; and glycol ether solvents such as propylene glycol monomethyl acetate, propylene glycol monomethyl ether, and propylene glycol monomethyl ether acetate.
Of them, t-butanol, diacetone alcohol, methyl ethyl ketone, methyl isobutyl ketone, ethyl acetate, and propylene glycol monomethyl ether acetate are preferable from the viewpoint of, e.g., low reactivity with isocyanate, solubility and drying property.
The content of the solvent in the coating composition is preferably 40 to 90 mass%, more preferably 50 to 85 mass%, and still more preferably 55 to 80 mass% from the viewpoint of controlling the film thickness of the anti-fog layer.
The solid content of the coating composition is preferably 10 mass% or more, more preferably 15 mass% or more, and still more preferably 20 mass% or more from the viewpoint of obtaining a spectacle lens excellent in anti-fogging property and antibacterial property, and is preferably 60 mass% or less, more preferably 50 mass% or less, and still more preferably 45 mass% or less from the viewpoint of obtaining a spectacle lens excellent in anti-fogging property. From the above viewpoint, the solid content of the coating composition is preferably 10 to 60 mass%, more preferably 15 to 50 mass%, and still more preferably 20 to 45 mass%.
The total content of the components (A) to (D) in the solid content of the coating composition is preferably 60 mass% or more, more preferably 80 mass% or more, still more preferably 90 mass% or more, still even more preferably 95 mass% or more, and preferably 100 mass% or less, for example, 100 mass%, from the viewpoint of improving anti-fogging property and antibacterial property.

(Other additives)

The coating composition may contain additives such as a curing catalyst, an ultraviolet absorber, a light stabilizer, a surfactant, a leveling agent, and an antifoaming agent, as necessary.
The content of the additive is, for example, preferably 0.001 to 5 mass%, more preferably 0.01 to 4 mass%, and still more preferably 0.1 to 3 mass% based on the total mass of the coating composition.
In addition, from the viewpoint of improving the scratch resistance and surface smoothness of the spectacle lens to be obtained, e.g., metal oxide colloidal particles containing silica, alumina, zirconia, titania, zinc oxide, strontium titanate, iron oxide, tungsten oxide, iron titanate, bismuth oxide, zinc oxide, silver oxide, copper oxide, cobalt oxide or nickel oxide, may be contained.
The coating composition can be prepared by dissolving or dispersing individual optional components in a solvent.
Individual components can be dissolved or dispersed in the solvent simultaneously or sequentially in any order. A specific method for dissolving or dispersing components is not particularly limited, and a known method can be employed without any limitation.

<Other layers>

The spectacle lens may have a functional layer other than the anti-fog layer.
Examples of the functional layer include a hard coat layer, an antireflection layer, and a primer layer.
The functional layer may be provided on a first main surface of a lens substrate, may be provided on a second main surface of the lens substrate, or both a first main surface and a second main surface of a lens substrate. In addition, after the functional layer is provided on a lens substrate, an anti-fog layer may be provided on the functional layer, or after an anti-fog layer is provided on a lens substrate, a functional layer may be provided.
Examples of the primer in the primer layer include a urethane primer, an epoxy primer, a polyester primer, and a polyurethane urea primer.

[Method for manufacturing spectacle lens]

The method for manufacturing a spectacle lens according to the present embodiment includes a curing step of curing a coating composition containing a curable resin and an antibacterial agent on a substrate. The spectacle lens according to the present embodiment can be easily produced by the production method.
The "coating composition on a substrate" may be "a coating composition directly applied onto a substrate" or "a coating composition applied onto a functional layer provided on a substrate".

In one aspect, first, a coating composition for coating is prepared by dissolving or dispersing individual components used as necessary in a solvent.

Subsequently, an anti-fog layer is formed using the obtained coating composition 1 (curing step). In the curing step, it is preferable to apply the coating composition onto the substrate or another layer formed on the substrate, and subsequently perform pre-curing at preferably 70 to 120°C, more preferably 75 to 110°C, and still more preferably 80 to 100°C, for preferably 10 to 60 minutes, more preferably 15 to 50 minutes, and still more preferably 20 to 40 minutes.

Examples of the method for applying an anti-fog layer include, but are not particularly limited to, an air spray method, an airless spray method, an electrostatic coating method, a roll coater method, a flow coater method, a spin coating method, and a dipping method. A dipping method is preferable from the viewpoint of productivity.

When the dipping method is employed as the application method, usually, the film thickness of the portion first pulled up from the dipping tank (coating composition tank) becomes thin, and the film thickness of the portion finally pulled up from the dipping tank becomes thick. Therefore, when a coating composition is applied in a plurality of times, it is preferable to perform dipping by rotating a substrate vertically by 180 degrees every coating. In this manner, a spectacle lens having an anti-fog layer uniform in thickness is easily obtained.

The anti-fog layer formed is preferably dried to cure at 20 to 160°C for 10 to 180 minutes, and preferably at 60 to 130°C for 20 to 150 minutes. The temperature and time for drying/curing may be appropriately controlled in consideration of e.g., the type of solvent, the heat resistance of the lens substrate.

After the functional layer (e.g., hard coat layer, primer layer, antireflection layer) described above is provided on the lens substrate, the anti-fog layer may be provided as necessary on the functional layer. Alternatively, on the anti-fog layer provided on the lens substrate, a functional layer may be provided.

In the present disclosure, as for the examples of components, contents, and physical properties, examples or matters disclosed as a preferable range in the detailed description of the invention may be arbitrarily employed in combination.

In addition, if a composition described in Examples is adjusted to the composition described in the detailed description of the invention, the invention can be performed in the same manner as in Examples in the entire range of the composition claimed.

## Examples

Next, the present disclosure will be described in more detail by way of Examples, but the present disclosure is not limited in any way by these Examples.

### <Measurement and evaluation>

The coating compositions and spectacle lenses obtained in the following Examples and Comparative Example were measured and evaluated for the following items. The measurement/evaluation results are summarized in Table 1.

### (Hydroxyl value)

The hydroxyl values of the resin components ( a (meth)acrylic resin, a polyol compound, a mixture of a (meth) acrylic resin and a polyol compound) constituting the coating composition were measured and calculated in accordance with the method specified in "7.1 Neutralization Titration Method" of JIS K 0070:1992 "Method for Testing Acid Value, Saponification Value, Ester Value, Iodine Value and Hydroxyl Value, and Unsaponified Chemical Product".

The value of the acid value used for calculating a hydroxyl value was measured and calculated according to the method specified in "3.1 Neutralization Titration Method" of the JIS standard described above.

### (Number average molecular weight (Mn), weight average molecular weight (Mw), polydispersity index (Mw/Mn))

Mn, Mw, and Mw/Mn of a (meth)acrylic resin as a resin component constituting the coating composition were measured and calculated by gel permeation chromatography (GPC). The apparatus, conditions, and others used herein are as follows.

· Equipment used: HLC8220GPC (manufactured by Tosoh Corporation)
Column used: TSKgel SuperHZM-M, TSKgel GMHXL-H, TSKgel G2500HXL, TSKgel G5000HXL (manufactured by Tosoh Corporation)
· Column temperature: 40°C
Standard substance: TSKgel standard polystyrene A1000, A2500, A5000, F1, F2, F4, F10 (manufactured by Tosoh Corporation)

· Detector: RI (refractive index) detector
· Eluent: tetrahydrofuran
· Flow rate: 1 ml/min

(Evaluation of Dispersibility)

The dispersibility of the antibacterial agent in the obtained coating composition was evaluated according to the following evaluation criteria based on visual observation of the turbidity of the coating composition.

4: Not cloudy at all
3: Slight decrease in transparency can be confirmed.
2: A decrease in transparency can be clearly observed, but aggregation sedimentation is not observed.
1: Cloudiness, aggregation sedimentation is observed.

(Measurement of film thickness of anti-fog layer)

The film thickness of the anti-fog layer of the obtained spectacle lens was measured using a non-contact film thickness measurement system FF8 manufactured by System Road Co., Ltd.

(Evaluation of appearance)

The obtained spectacle lenses were visually observed under a fluorescent lamp, and evaluated according to the following evaluation criteria.

3: Excellent transparency
2: Slight cloudiness (decrease in transparency) of a film is observed.
1: Cloudiness (decrease in transparency) of a film is significant.

(Evaluation of light resistance)

The YI value of the obtained spectacle lens was measured. After 0.32 kw irradiation was performed for 200 hours by a xenon weather meter XA25 manufactured by Suga Test Instruments Co., Ltd., the YI value was measured again and the difference between them was obtained as ΔYI (change amount). The light resistance of the anti-fog layers were evaluated according to the following evaluation criteria.

4: The ΔYI value is 0.5 or less.
3: The ΔYI value is more than 0.5 and 1 or less.
2: The ΔYI value is more than 1 and 2 or less.
1: The ΔYI value is more than 2.

(Evaluation of scratch resistance)

The surface of the anti-fog layer of the obtained spectacle lens was rubbed back and forth 20 times with steel wool #0000 (manufactured by Nippon Steel Wool Co., Ltd.) under a load of 500 g, and the scratch resistance of the anti-fog layer was visually evaluated according to the following evaluation criteria.

5: Few scratches are generated
4: 1 to 10 scratches are generated
3: 11 to 30 scratches are generated
2: A surface is fogged
1: The anti-fog layer is peeled off.

(Evaluation of antibacterial property)

In accordance with JIS Z 2801:2012, an antibacterial property test of spectacle lenses of Examples and Comparative Example was performed as follows.
A test piece of 50 mm × 50 mm (excised from each of the spectacle lenses) was placed in a sterilized petri dish, and then 0.4 mL of a bacterial suspension containing $1.0 \times 10^5$ to $4.0 \times 10^5$ test bacteria *(Staphylococcus aureus* or

*Escherichia coli)* was dropped to the center of the test piece, and covered with a polyethylene film cut into 40 mm × 40 mm. After the petri dish was cultured at a relative humidity of 90% or more for 24 hours, the number of viable bacterial cells per 1 $cm^2$ was measured. The following antibacterial activity value was calculated, and the antibacterial property of the anti-fog layer of the obtained spectacle lens was evaluated according to the following evaluation criteria.

$$\text{Antibacterial activity value} = Ut_1 - At_1$$

$Ut_1$: Average of logarithmic values of the viable cell count per 1 $cm^2$ after 24 hours of culture of an untreated test pieces (reference sample: test piece of Comparative Example 1).
$At_1$: Average of logarithmic values of the viable cell count per 1 $cm^2$ after 24 hours of culture of test pieces subjected to antibacterial treatment (samples of Examples).

Note that the SIAA (The Society of International sustaining growth for Antimicrobial Articles) specifies that when the antibacterial activity value is 2.0 or more, the product has an antibacterial effect.

4: Antibacterial activity value of 3 or more
3: Antibacterial activity value of 2 or more and less than 3
2: Antibacterial activity value of 1 or more and less than 2
1: Antibacterial activity value of less than 1

(Evaluation of antiviral property)

According to ISO21702:2019, the antiviral property test of the spectacle lenses of Examples and Comparative Example was performed as follows.
The surface of a 50 mm × 50 mm test piece (test piece cut out from each spectacle lens) was inoculated with a test virus solution (0.4 ml) and covered with a film. Hereinafter, the test piece covered with the film is referred to as a sample. As virus strains, two types of viruses, i.e., influenza virus (H3N2) and feline calicivirus, were used. The feline calicivirus was used as an alternative virus to the norovirus.
The sample inoculated with a virus liquid was allowed to stand (contact) for 24 hours in an environment at a temperature of 25 ± 1°C and a relative humidity of 90% or more.
After 24 hours, the virus was recovered from the sample, and the viral infectivity titer was measured by a plaque method. The following antiviral activity values were calculated, and the antiviral property of the anti-fog layer of the obtained spectacle lens was evaluated according to the following evaluation criteria.

$$\text{Antiviral activity value} = Ut_2 - At_2$$

$Ut_2$: Viral infectivity titer of unprocessed test piece (for reference: test piece of Comparative Example 1)
$At_2$: Viral infectivity of an antibacterial processed test piece (test piece of each Example)

Note that the SIAA (The Society of International sustaining growth for Antimicrobial Articles) specifies that a product having an antiviral activity value of 2.0 or more has an antiviral effect.

4: The antiviral activity value against both influenza virus (H3N2) and feline calicivirus is 2 or more.
3: The antiviral activity value against either one of influenza virus (H3N2) and feline calicivirus is 2 or more.
2: The antiviral activity value against at least one of influenza virus (H3N2) and feline calicivirus is 1 or more and less than 2 (other than the above 3 (O)).
1: The antiviral activity value against both influenza virus (H3N2) and feline calicivirus is less than 1.

(Evaluation of anti-fogging property)

The surface of the anti-fog layer of the obtained spectacle lens was fogged with a breath for 10 seconds at a room temperature of 25°C and a humidity of 40%. The state of the anti-fog layer from initiation of blowing to the end was visually observed and evaluated according to the following evaluation criteria.

3: Fogging is not observed at all (excellent anti-fogging property)

2: Fogging is observed, and 5 seconds or more is required for overcoming fogging (the degree of anti-fogging property is medium)
1: Fogging is observed, and 10 seconds or more is required for overcoming fogging (inferior in anti-fogging property)

(Synthesis of (meth)acrylic resin)

A flask of 500 mL in volume equipped with a stirrer, a thermometer, a condenser, and a nitrogen gas inlet tube, 150 parts by mass of propylene glycol monomethyl acetate (PGMAC) was charged, and raised in temperature up to 110°C.
Separately, 25 parts by mass of dimethylacrylamide (DMAA), 35 parts by mass of polycaprolactone-modified hydroxyethyl acrylate (PLACCEL FA2D, manufactured by Daicel Corporation), 10 parts by mass of 2-hydroxylethyl methacrylate (HEMA), 5 parts by mass of polydimethylsiloxane modified with at one terminal (Silaplane FM-0721, manufactured by JNC Corporation, molecular weight: 5,000), 25 parts by mass of methyl methacrylate, and 1 part by mass of 1,1'-azobis(cyclohexane-1-carbonitrile) (V-40, manufactured by Wako Pure Chemical Industries, Ltd.) were mixed. The mixed monomer was added dropwise to the flask of 500 mL in volume with stirring over 2 hours, and reacted 110°C for 5 hours.
The heating was stopped and the mixture was cooled to room temperature (23°C) to obtain a resin solution containing a (meth)acrylic resin (solid content ratio: 40 mass%).
The obtained (meth)acrylic resin had a hydroxyl value of 57 mg KOH/g, a number average molecular weight (Mn) of 12,000, a weight average molecular weight (Mw) of 44,000, and a degree of polydispersity (Mw/Mn) of 3.67. The glass transition temperature (Tg) of the (meth)acrylic resin calculated from the blending ratio of the monomers used herein based on the above Fox's equation was 32.8°C.

(Preparation of resin composition 1)

A resin composition 1 was prepared by mixing the following components.

Propylene glycol monomethyl ether acetate: 29 mass%
Diacetone alcohol: 19 mass%
Methyl ethyl ketone: 14 mass%
t-Butanol: 8 mass%
Ethyl acetate: 8 mass%
Resin: 22 mass%

The resin has the following composition.

(Meth)acrylic resin obtained above: 100 parts by mass

Polyol compound (polycaprolactone diol (PLACCEL 205U, manufactured by Daicel Corporation, molecular weight: 530, hydroxyl value: 207 to 217 mg KOH/g): 30 parts by mass.
Polyfunctional isocyanate compound (24A-100, manufactured by Asahi Kasei Corporation, biuret type hexamethylene diisocyanate, isocyanate-group content: 23.5 mass%, solid content: 100 mass%): 23.5 parts by mass.
The amount of the (meth)acrylic resin does not represent the amount as a resin solution (solid content: mass%), but represents the amount of the resin (solid content) contained in the resin solution. The amount of the polyfunctional isocyanate compound also represents the amount as a solid content.
The measured value of the hydroxyl value of the mixture when the (meth)acrylic resin and the polyol compound were uniformly mixed in the above amounts was 93 mg KOH/g.

(Preparation of coating composition 1)

A dispersion solution ("Niccanon (registered trademark) RB-40", manufactured by Nicca Chemical Co., Ltd.; hereinafter, it is simply referred to as "antibacterial dispersion 1") of a quaternary ammonium salt in an organic solvent was added as an antibacterial agent to resin composition 1 to obtain coating composition 1.
At this time, antibacterial dispersion 1 was gradually added to resin composition 1 with a dropper such that the content of a quaternary ammonium salt as antibacterial agent in 100 mass% of the total amount of coating composition 1 became 0.05 mass% (the content of a quaternary ammonium salt as an antibacterial agent in 100 mass% of the anti-fog layer is 0.23 mass%). Further, coating composition 1 was stirred at 700 rpm for 1 hour using a magnetic stirrer (manufactured by Asone).

(Preparation of coating composition 2)

Antibacterial agent dispersion 1 was added to resin composition 1 to obtain coating composition 2.

At this time, antibacterial agent dispersion 1 was gradually added to resin composition 1 with a dropper such that the content of a quaternary ammonium salt as an antibacterial agent in 100 mass% of the total amount of coating composition 2 was 0.1 mass% (the content of a quaternary ammonium salt as an antibacterial agent in 100 mass% of the anti-fog layer is 0.45 mass%). Further, coating composition 2 was stirred at 700 rpm for 1 hour using a magnetic stirrer (manufactured by Asone).

(Preparation of coating composition 3)

Antibacterial agent dispersion 1 was added to resin composition 1 to obtain coating composition 3.

At this time, antibacterial agent dispersion 1 was gradually added to resin composition 1 with a dropper such that the content of a quaternary ammonium salt as an antibacterial agent in 100 mass% of the total amount of coating composition 3 was 0.2 mass% (the content of a quaternary ammonium salt as an antibacterial agent in 100 mass% of the anti-fog layer is 0.90 mass%.). Further, coating composition 3 was stirred at 700 rpm for 1 hour using a magnetic stirrer (manufactured by Asone).

(Preparation of coating composition 4)

Antibacterial agent dispersion 1 was added to resin composition 1 to obtain coating composition 4.

At this time, antibacterial agent dispersion 1 was gradually added to resin composition 1 with a dropper such that the content of a quaternary ammonium salt as an antibacterial agent in 100 mass% of the total amount of coating composition 4 was 0.5 mass% (the content of a quaternary ammonium salt as an antibacterial agent in 100 mass% of the anti-fog layer is 2.27 mass%). Further, coating composition 4 was stirred at 700 rpm for 1 hour using a magnetic stirrer (manufactured by Asone).

(Preparation of coating composition 5)

Antibacterial agent dispersion 1 was added to resin composition 1 to obtain coating composition 5.

At this time, antibacterial agent dispersion 1 was gradually added to resin composition 1 with a dropper such that the content of a quaternary ammonium salt as an antibacterial agent in 100 mass% of the total amount of coating composition 5 was 1 mass% (the content of a quaternary ammonium salt as an antibacterial agent in 100 mass% of the anti-fog layer is 4.54 mass%). Further, coating composition 5 was stirred at 700 rpm for 1 hour using a magnetic stirrer (manufactured by Asone).

(Preparation of coating composition 6)

Antibacterial agent dispersion 1 was added to resin composition 1 to obtain coating composition 6.

At this time, antibacterial agent dispersion 1 was gradually added to resin composition 1 with a dropper such that the content of a quaternary ammonium salt as an antibacterial agent in 100 mass% of the total amount of coating composition 6 was 5 mass% (the content of a quaternary ammonium salt as an antibacterial agent in 100 mass% of the anti-fog layer is 22.73 mass%). Further, coating composition 6 was stirred at 700 rpm for 1 hour using a magnetic stirrer (manufactured by Asone).

(Preparation of coating composition 7)

The resin composition 1 was used as a coating composition 7.

(Preparation of coating composition 8)

An aqueous dispersion (aqueous dispersion containing silver particles having a particle diameter of 2 to 5 nm at a concentration of 5000 ppm by mass; hereinafter, it is simply referred to as "antibacterial agent dispersion 2".) of Ag nanocolloid as an antibacterial agent was added to resin composition 1 to obtain coating composition 8.

At this time, antibacterial agent dispersion 2 was gradually added to resin composition 1 with a dropper such that the content of Ag nanocolloid as an antibacterial agent was 0.05 mass% (the content of Ag nanocolloid as an antibacterial agent in 100 mass% of the anti-fog layer is 0.23 mass%) based on 100 mass% of the total amount of coating composition 1. Further, coating composition 8 was stirred at 700 rpm for 1 hour using a magnetic stirrer (manufactured by Asone).

(Preparation of coating composition 9)

An antibacterial agent dispersion 1 and antibacterial agent dispersion 2 were added to resin composition 1 to obtain coating composition 9.

At this time, the antibacterial agent dispersion 1 and the antibacterial dispersion 2 were gradually added to the resin composition 9 with a dropper such that the content of the quaternary ammonium salt as the antibacterial agent in 100 mass% of the total amount of the coating composition 9 was 0.80 mass% (the content of a quaternary ammonium salt as an antibacterial agent in 100 mass% of the anti-fog layer is 3.65 mass%), and the content of the Ag nanocolloid as the antibacterial agent in 100 mass% of the total amount of the coating composition 9 was 0.14 mass% (the content of Ag nanocolloid as an antibacterial agent in 100 mass% of the anti-fog layer is 0.89 mass%.). Further, coating composition 9 was stirred at 700 rpm for 1 hour using a magnetic stirrer (manufactured by Asone).

[Example 1]

Using a thiourethane plastic lens "EYAS" (manufactured by HOYA Corporation, refractive index: 1.60, center thickness: 2.0 mm, diameter: 75 mm) as a substrate, the obtained coating composition 1 was applied onto the substrate by a dipping method (pulling speed: 5 mm/sec), then heated at a temperature of 100°C for 20 minutes, and then allowed to cool.

Thereafter, the coating composition 1 was cured by heating at 120°C for 140 minutes (curing step) to produce a spectacle lens having an anti-fog layer on the substrate. The evaluation results of the obtained spectacle lens are shown in Table 1.

[Example 2]

A spectacle lens was produced in the same manner as in Example 1 except that the coating composition 2 was used in place of the coating composition 1. The evaluation results of the obtained spectacle lens are shown in Table 1.

[Example 3]

A spectacle lens was produced in the same manner as in Example 1 except that the coating composition 3 was used in place of the coating composition 1. The evaluation results of the obtained spectacle lens are shown in Table 1.

[Example 4]

A spectacle lens was produced in the same manner as in Example 1 except that the coating composition 4 was used in place of the coating composition 1. The evaluation results of the obtained spectacle lens are shown in Table 1.

[Example 5]

A spectacle lens was produced in the same manner as in Example 1 except that the coating composition 5 was used in place of the coating composition 1. The evaluation results of the obtained spectacle lens are shown in Table 1.

[Example 6]

A spectacle lens was produced in the same manner as in Example 1 except that the coating composition 6 was used in place of the coating composition 1. The evaluation results of the obtained spectacle lens are shown in Table 1.

[Comparative Example 1]

A spectacle lens was produced in the same manner as in Example 1 except that the coating composition 7 was used in place of the coating composition 1. The evaluation results of the obtained spectacle lens are shown in Table 1.

[Example 7]

A spectacle lens was produced in the same manner as in Example 1 except that the coating composition 8 was used in place of the coating composition 1. The evaluation results of the obtained spectacle lens are shown in Table 1.

[Example 8]

A spectacle lens was produced in the same manner as in Example 1 except that the coating composition 9 was used in place of the coating composition 1. The evaluation results of the obtained spectacle lens are shown in Table 1.

[Example 9]

A spectacle lens was produced in the same manner as in Example 5 except that a substrate prepared by applying a urethane primer (trade name: Evafanol HA-50C, manufactured by Nicca Chemical Co., Ltd.) to the thiourethane plastic lens "EYAS" (manufactured by HOYA CORPORATION, refractive index: 1.60, center thickness: 2.0 mm, diameter: 75 mm) by a dipping method (pulling speed: 5 mm/sec), followed by heating at a temperature of 100°C for 20 minutes, and then cooling, was used in place of the thiourethane plastic lens "EYAS" (manufactured by HOYA CORPORATION, refractive index: 1.60, center thickness: 2.0 mm, diameter: 75 mm). The evaluation results of the obtained spectacle lens are shown in Table 1.

[Table 1]

Table 1

| | Anti-fog layer | | Evaluation of coating composition or spectacular lens | | | | | | |
|---|---|---|---|---|---|---|---|---|---|
| | Type of antibacterial agent (mass%) | Thickness (μm) | Dispersibility | Appearance | Light resistance (anti-yellow) | Scratch resistance | Antibacterial property | Antiviral property | Anti-fogging property |
| Example 1 | Quaternary ammonium salt (0.23) | 10 | 4 | 3 | 4 | 4 | 4 | 1 | 3 |
| Example 2 | Quaternary ammonium salt (0.45) | 10 | 4 | 3 | 4 | 4 | 4 | 1 | 3 |
| Example 3 | Quaternary ammonium salt (0.90) | 10 | 4 | 3 | 4 | 4 | 4 | 1 | 3 |
| Example 4 | Quaternary ammonium salt (2.27) | 10 | 4 | 3 | 4 | 4 | 4 | 3 | 3 |
| Example 5 | Quaternary ammonium salt (4.54) | 10 | 4 | 3 | 4 | 4 | 4 | 4 | 3 |
| Example 6 | Quaternary ammonium salt (22.73) | 10 | 4 | 2 | 4 | 1 | 4 | 4 | 3 |
| Comparative Example 1 | - | 10 | 4 | 3 | 4 | 4 | 1 | 1 | 3 |
| Example 7 | Ag (0.23) | 7 | 4 | 3 | 1 | 4 | 4 | 4 | 3 |
| Example 8 | Ag (0.89) Quaternary ammonium salt (3.65) | 10 | 4 | 3 | 4 | 4 | 4 | 3 | 3 |
| Example 9 | Quaternary ammonium salt (4.54) | 10 | 4 | 3 | 4 | 4 | 4 | 4 | 3 |

From the results of Examples and Comparative Example in the above, it is found that the spectacle lenses according to Examples are excellent in anti-fogging property and antibacterial property.

Of Examples 1 to 9, Examples 5 and 9 are most preferable because the lenses are excellent in dispersibility, appearance, light resistance, scratch resistance, and antiviral property in addition to anti-fogging property and antibacterial property. Example 8 and Example 4 are second-most preferable because the lenses have the same properties as those of Example 5 and Example 9 except that the evaluation of the antiviral property is not "4" but "3". Example 3, Example 2, and Example 1 are further second-most preferable because the lenses have the same properties as those of Example 5 and Example 9 except that the evaluation of the antiviral property is "1". Example 7 is still second-most preferable because the lens has the same properties as those of Example 5 and Example 9 except that the evaluation of light resistance is "1". Example 6 is still second-most preferable because the lens has the same properties as those of Example 5 and Example 9 except that the evaluation of the appearance is "2" and the evaluation of the scratch resistance is "1".

Finally, the embodiments of the present disclosure will be summarized.

A spectacle lens according to the embodiment of the present disclosure is a spectacle lens having a substrate and an anti-fog layer, wherein the anti-fog layer contains a resin and an antibacterial agent.

According to the aforementioned embodiment, it is possible to provide a spectacle lens having anti-fogging property and excellent antibacterial property.

The embodiment disclosed herein is an example in every respect and should not be restrictively understood. The scope of the present disclosure is defined not by the above description but by claims, and intends to include all modifications within meaning and a scope equal to claims.

In the present disclosure, as for the examples of components, contents, and physical properties, matters exemplified or described as a preferable range in the detailed description of the invention may be combined with each other arbitrarily.

If the composition described in Examples is adjusted so as to be the composition described in the detailed description of the invention, the embodiment in the present disclosure can be performed in the same manner as in Examples in the entire claimed composition range.

## Claims

1. A spectacle lens comprising a substrate and an anti-fog layer, wherein the anti-fog layer has a thickness of 5 to 50 um, and the anti-fog layer contains a resin and an antibacterial agent.

2. The spectacle lens according to claim 1, wherein the anti-fog layer is a layer formed of a coating composition containing a resin and an antibacterial agent.

3. The spectacle lens according to claim 1 or 2, wherein a resin constituting the anti-fog layer includes a (meth)acrylic resin.

4. The spectacle lens according to any one of claims 1 to 3, wherein the anti-fog layer is a cured product of a coating composition containing the following components (A) to (D):

   Component (A): a (meth)acrylic resin (A) having a constituent unit derived from a monomer (a-1) represented by the following general formula (1), a constituent unit derived from a monomer (a-2) represented by the following general formula (2), a constituent unit derived from a hydroxyalkyl (meth)acrylate (a-3), and a constituent unit derived from a monomer (a-4) represented by the following general formula (3),
   Component (B): a polyol compound (B),
   Component (C): a polyfunctional isocyanate compound (C), and
   Component (D): an antibacterial agent (D),

[Chem.1]

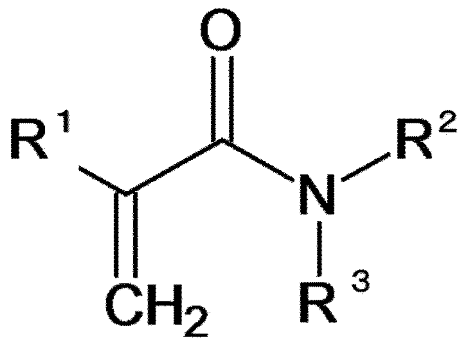

(1)

wherein $R^1$ is a hydrogen atom or a methyl group, $R^2$ and $R^3$ are each independently a hydrogen atom or an alkyl group having 1 to 3 carbon atoms, and $R^2$ and $R^3$ may be the same or different,

[Chem.2]

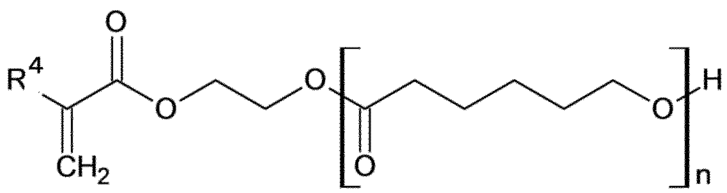

(2)

wherein $R^4$ is a hydrogen atom or a methyl group, and n is an integer of 1 to 5, and

[Chem.3]

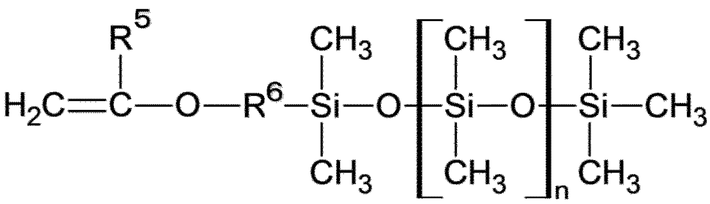

(3)

wherein $R^5$ is a hydrogen atom or a methyl group, $R^6$ is a divalent organic group, and n is 0 or an integer of 1 or more.

**5.** The spectacle lens according to any one of claims 1 to 4, wherein the antibacterial agent is a cationic organic compound.

**6.** The spectacle lens according to claim 5, wherein the antibacterial agent is a quaternary ammonium salt.

**7.** The spectacle lens according to any one of claims 1 to 6, wherein a content of the antibacterial agent in the anti-fog layer is less than 22.73 mass%.

**8.** The spectacle lens according to any one of claims 1 to 7, wherein the substrate and the anti-fog layer are directly laminated.

**9.** The spectacle lens according to any one of claims 1 to 7, wherein the substrate, a primer layer provided on the substrate and the anti-fog layer provided on the primer layer are laminated.

**10.** The spectacle lens according to any one of claims 1 to 9, wherein the anti-fog layer is an outermost layer.

11. A method for manufacturing a spectacle lens according to any one of claims 1 to 10, comprising a curing step of curing a coating composition containing a curable resin and an antibacterial agent on a substrate.

12. The method for manufacturing the spectacle lens according to claim 11, wherein the coating composition contains the following components (A) to (D):

Component (A): a (meth)acrylic resin (A) having a constituent unit derived from a monomer (a-1) represented by the following general formula (1), a constituent unit derived from a monomer (a-2) represented by the following general formula (2), a constituent unit derived from a hydroxyalkyl (meth)acrylate (a-3), and a constituent unit derived from a monomer (a-4) represented by the following general formula (3),
Component (B): a polyol compound (B),
Component (C): a polyfunctional isocyanate compound (C), and
Component (D): an antibacterial agent (D),

[Chem.4]

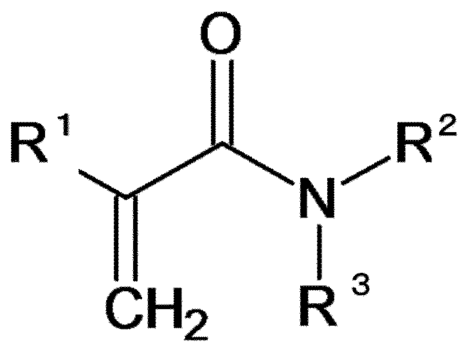

(1)

wherein $R^1$ is a hydrogen atom or a methyl group, $R^2$ and $R^3$ are each independently a hydrogen atom or an alkyl group having 1 to 3 carbon atoms, and $R^2$ and $R^3$ may be the same or different,

[Chem.5]

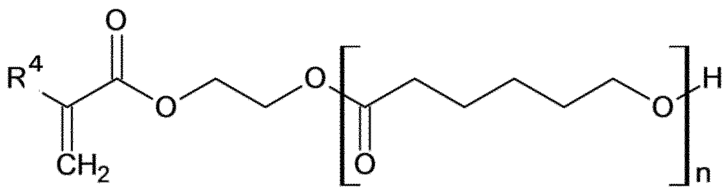

(2)

wherein $R^4$ is a hydrogen atom or a methyl group, and n is an integer of 1 to 5, and

[Chem.6]

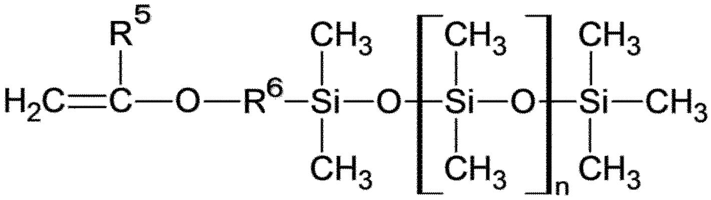

(3)

wherein $R^5$ is a hydrogen atom or a methyl group, $R^6$ is a divalent organic group, and n is 0 or an integer of 1 or more.

13. The method for manufacturing a spectacle lens according to claim 11 or 12, wherein a content of the antibacterial

agent in 100 mass% of a total amount of the coating composition is less than 5 mass%.

**INTERNATIONAL SEARCH REPORT**

International application No. **PCT/JP2023/007716**

**A. CLASSIFICATION OF SUBJECT MATTER**

***G02C 7/00***(2006.01)i; ***G02C 7/02***(2006.01)i; ***C09D 133/14***(2006.01)i; ***C09D 133/26***(2006.01)i; ***C09D 143/04***(2006.01)i; ***C09D 7/63***(2018.01)i; ***G02B 1/10***(2015.01)i
FI: G02C7/00; C09D7/63; C09D133/14; C09D133/26; C09D143/04; G02B1/10; G02C7/02

According to International Patent Classification (IPC) or to both national classification and IPC

**B. FIELDS SEARCHED**

Minimum documentation searched (classification system followed by classification symbols)

G02C7/00; G02C7/02; C09D133/14; C09D133/26; C09D143/04; C09D7/63; G02B1/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2019-094468 A (NATOKO KK) 20 June 2019 (2019-06-20)<br>paragraphs [0009], [0013], [0087], [0089], [0097] | 1-13 |
| Y | JP 2020-522731 A (CELANESE INTERNATIONAL CORPORATION) 30 July 2020 (2020-07-30)<br>paragraph [0067] | 1-13 |
| Y | CN 111841437 A (GUIZHOU MATERIAL INDUSTRY TECHNOLOGY INSTITUTE) 30 October 2020 (2020-10-30)<br>paragraphs [0025], [0078], [0083] | 1-13 |
| Y | CN 111574899 A (HUNAN AEROSPACE SANFENG SCIENCE AND TECHNOLOGY CO., LTD.) 25 August 2020 (2020-08-25)<br>paragraphs [0002], [0007], [0044] | 1-13 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 April 2023** | **25 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/007716**

| Patent document cited in search report | Publication date (day/month/year) | Patent family member(s) | Publication date (day/month/year) |
|---|---|---|---|
| JP 2019-094468 A | 20 June 2019 | (Family: none) | |
| JP 2020-522731 A | 30 July 2020 | US 2018/0333940 A1<br>paragraph [0071]<br>WO 2018/213246 A1<br>EP 3625290 A1<br>CA 3063373 A1<br>KR 10-2020-0008594 A<br>CN 110637055 A | |
| CN 111841437 A | 30 October 2020 | (Family: none) | |
| CN 111574899 A | 25 August 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013005710 A